# EUROPEAN PATENT SPECIFICATION

(11) **EP 4 044 884 B1**
(45) Date of publication and mention of the grant of the patent: **01.03.2023**
(21) Application number: 20785986.9
(22) Date of filing: 07.10.2020
(51) Int. Cl.: A47J 42/40, A47J 31/42

(54) **COFFEE GRINDING MACHINE WITH FILTER-HOLDER DETECTION SYSTEM**
KAFFEEMAHLMASCHINE MIT FILTERHALTERDETEKTIONSSYSTEM
MACHINE À MOUDRE LE CAFÉ DOTÉE D'UN SYSTÈME DE DÉTECTION DE PORTE-FILTRE

(30) Priority: 16.10.2019 IT 201900019007
(43) Date of publication of application: 24.08.2022
(73) Proprietor: Conti Valerio - S.r.l., 50019 Sesto Fiorentino (FI) (IT)
(72) Inventor: FIORANI, Maurizio, 20122 Milano (IT)
(74) Representative: Cutropia, Gianluigi
(86) International application number: PCT/EP2020/078098
(87) International publication number: WO 2021/073972

(56) References cited:
- EP-A1- 2 071 986
- EP-A1- 2 865 302
- EP-A1- 3 329 812
- DE-U1-202014 002 225

## Description

The present invention relates to a coffee grinding machine with a filter-holder detection system.

As it is known, the catering services provided with coffee machines that use ground coffee are also provided with coffee grinding machines. Coffee beans maintain their organoleptic characteristics much better than ground coffee. Therefore, catering services are provided with a supply of coffee beans that are ground when necessary by means of the coffee grinding machine.

For such a reason, the coffee grinding machine comprises a hopper wherein the coffee beans are loaded, a grinding unit to grind the coffee beans and a delivery conduit to deliver ground coffee.

Considering that the ground coffee is to be used in a coffee machine in order to extract liquid coffee, the coffee grinding machine generally comprises a support disposed under the delivery conduit to support a filter-holder suitable for being filled with ground coffee and then used in the coffee machine.

The filling of the filter-holder with ground coffee is a very important operation because the filter-holder is to be filled with a correct dose of ground coffee to ensure a good quality of the liquid coffee that is extracted in the coffee machine.

Generally speaking, different types of filter-holders are used and filled with a different quantity of ground coffee. Therefore, it is quite difficult for the operator to measure the correct dose of ground coffee according to the type of filter-holder used.

US2013/0001339 discloses an apparatus for grinding coffee provided with a sensor element composed of a button with a switch that detects when a container suitable for containing ground coffee is correctly disposed in its housing under the ground discharge region. Such a system is suitable for detecting a cup-shaped container, but it is not suitable for a filter-holder.

EP3023041 discloses a coffee grinding machine comprising a presence sensor to detect a correct positioning of the filter-holder in a weighing platform of the filter-holder in order to correctly weigh the ground coffee contained in the filter-holder. However such a system is not suitable for detecting and distinguishing different types of filter-holders.

EP2865302 discloses a device for identification of a filter-holder of an espresso coffee machine, comprising a radiation sensor provided with a heat radiation-sensitive element and an optical apparatus that focuses radiations on the sensitive element.

DE202014002225 discloses a coffee machine with fastening elements designed for the mechanical fastening of the filter-holder to the support of the machine, wherein said fastening elements are designed to detect the presence and/or the type of the filter-holder used.

The purpose of the present invention is to eliminate the drawbacks of the prior art by disclosing a coffee grinding machine with a filter-holder detection system that is capable of detecting the type of filter-holder mounted in the coffee grinding machine for a correct filling of the filter-holder.

Another purpose of the present invention is to disclose a coffee grinding machine with a filter-holder detection system that is reliable, efficient and easy to install and use.

These purposes are achieved according to the invention with the characteristics of the independent claim 1.

Advantageous embodiments of the invention appear from the dependent claims.

The coffee grinding machine with filter-holder detection system according to the invention is defined in the independent claim 1.

The coffee grinding machine according to the invention has several advantages compared to the machines of the prior art. In fact, by means of an inductive or magnetic sensor, the beaks of the filter-holder can be directed in a given direction on a horizontal plane, namely around the axis of the cup of the filter-holder.

In the solutions of the prior art, which are based on an optical sensor, if the two beaks of the filter-holder are aligned with the axis of detection of the optical sensor, a beak will cover the other beak, sending an incorrect piece of information to the electronics of the detection system. The same error occurs if the filter-holder is inserted with the handle not in perpendicular position relative to the front wall of the coffee grinding machine.

Moreover, the use of a sensor of inductive or magnetic type allows for using traditional filter-holders without having to modify the filter-holders with the addition of optional elements in the filter-holder, such as a projection or an electromagnetic device suitable for being recognized by the electronics of the detection system mounted in the coffee grinding machine.

Additional features of the invention will be clearer from the following detailed description, which refers to a merely illustrative, not limiting embodiment, as shown in the appended figures, wherein:
Fig. 1 is a diagrammatically perspective view of a coffee grinding machine according to the invention;
Fig. 2 is a perspective view of a first type of filter-holder;
Fig. 3 is a side view of the filter-holder of Fig. 2;
Figs. 4 and 5 are perspective views of a second type and of a third type of filter-holder, respectively;
Fig. 6 is a perspective view of a box that houses a supporting and detecting assembly of the filter-holder;

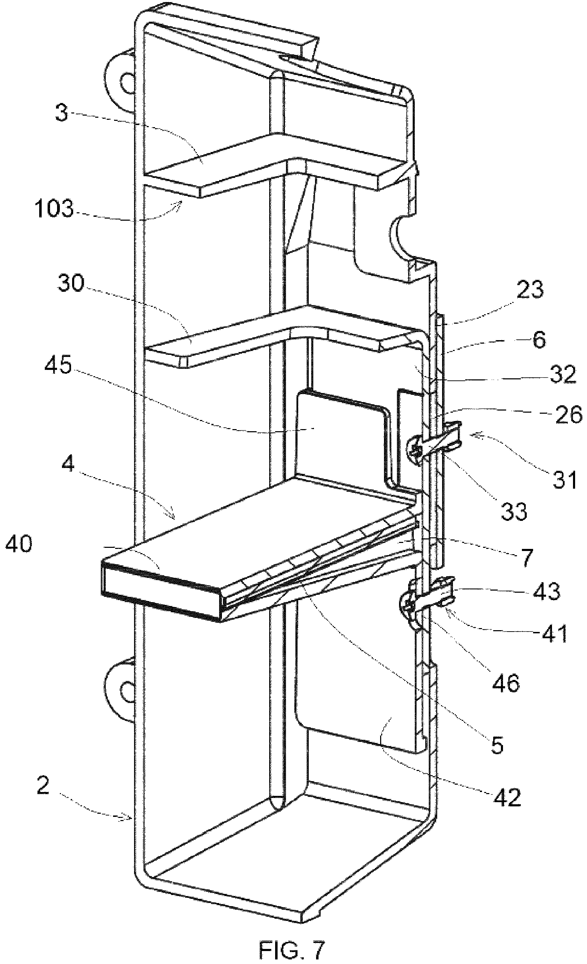

Fig. 7 is a sectional view taken along the sectional plane VII-VII of Fig. 6;
Fig. 8 is a top view of a sensor of the detection assembly of the filter-holder; and
Fig. 9 is a block diagram that shows the operation of the coffee grinding machine according to the invention.

With reference to the Figures, the coffee grinding machine according to the invention is disclosed, which is generally indicated with reference numeral 100.

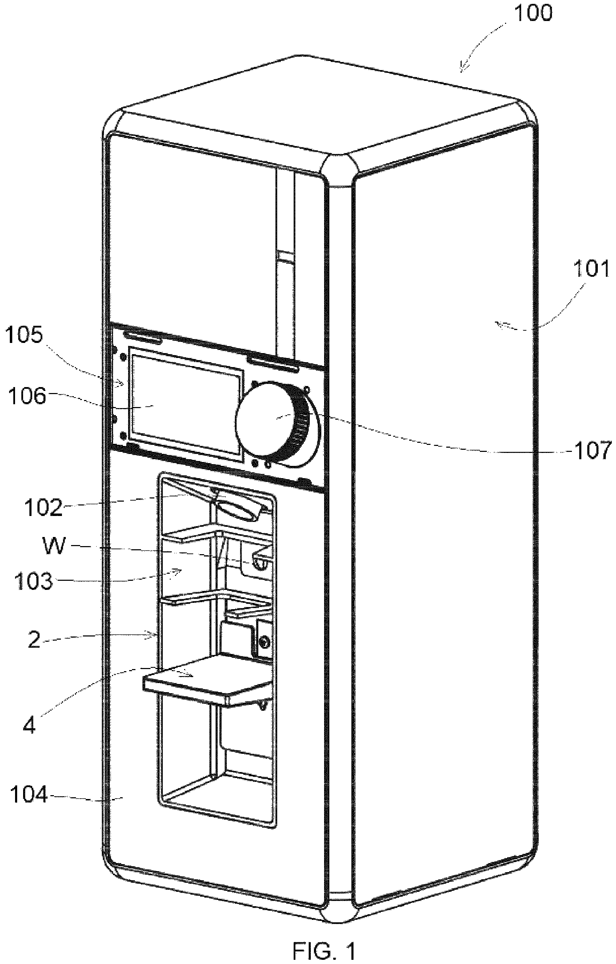

With reference to Fig. 1, the coffee grinding machine (100) has a frame (101) provided with a hopper or container suitable for containing coffee beans, and a grinding unit for grinding the coffee beans in such a way to obtain ground coffee.

The grinding unit is connected to a delivery conduit (102) to deliver ground coffee,

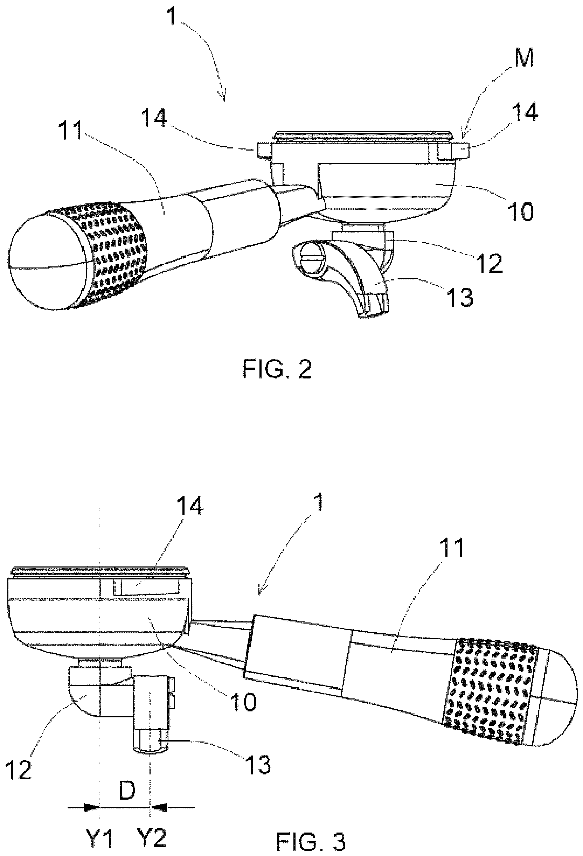

A support unit (103) is disposed under the delivery conduit (102) to support a filter-holder (1) shown in Fig. 2, and a detection unit (4) is disposed under said support unit (103) to detect the type of filter-holder supported by the support unit (103).

The coffee grinding machine comprises a control panel (105) with a display (106) and a knob (107) or buttons that can be manually operated by the user.

With reference to Fig. 2, the filter-holder (1) comprises a receptacle (10) suitable for containing one or two doses of ground coffee and a handle (11) that protrudes radially from the receptacle in order to be held by the operator.

The receptacle (10) is shaped like a cup that is open on top in order to receive the ground coffee. The receptacle is provided with fastening means (M) suitable for engaging with fastening means of a coffee machine in such a way to tightly fix the filter-holder (1) under the delivery unit of a coffee machine.

The fastening means (M) can be two lateral elements (14) that protrude radially outwards from the receptacle (10). In such a case, the filter-holder (1) is coupled with the coffee machine by means of a bayonet-coupling system.

The filter-holder (1) may comprise a delivery nozzle (12) connected with the interior of the receptacle (10) and protruding in lower position from the receptacle to extract liquid coffee. The delivery nozzle (12) may have a beak (13) or two beaks to deliver liquid coffee in one or two cups.

With reference to Fig. 3, the height (A) of the receptacle (10) varies according to the type of filter-holder.

The height (B) of the delivery nozzle (12) from the bottom of the receptacle to the lower end of the beak varies according to the type of filter-holder.

The receptacle (10) of the filter-holder has an axis (Y1) and the beak (13) has an axis (Y2). The axis (Y1) of the receptacle is spaced from the axis (Y2) of the beak by a distance (D).

Fig. 2 shows a first type of filter-holder (1) provided with a delivery nozzle (12) with only one beak (13). In such a case, the receptacle (10) is filled with one dose of ground coffee.

Fig. 3 shows a second type of filter-holder (201) provided with a delivery nozzle (12) with two beaks (13a, 13b). In such a case, the receptacle (10) is filled with two doses of ground coffee.

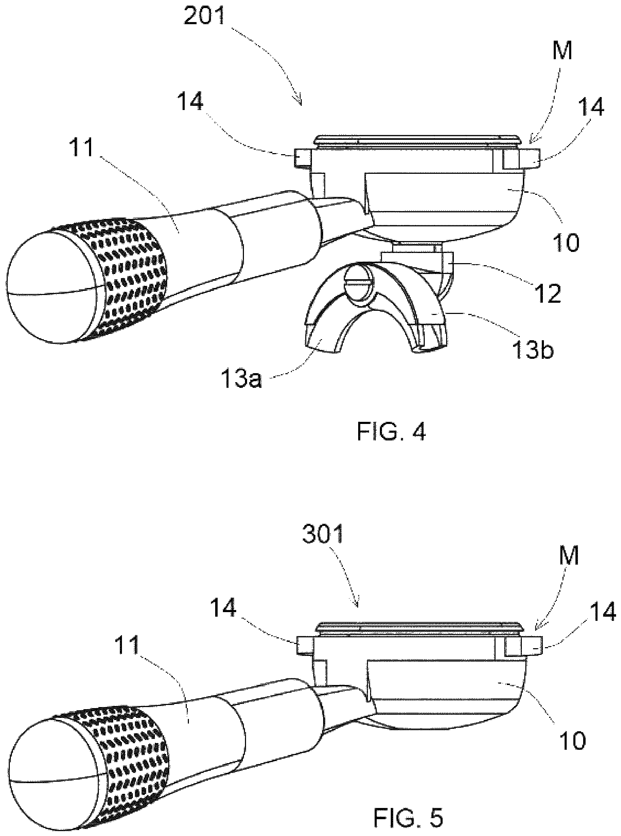

Fig. 4 shows a third type of filter-holder (301) without delivery nozzle (12), and without bottom in order to let the coffee out. Such a type of filter-holder, which is known as "bottomless or naked", is not provided with beaks and is only composed of the filter. It works as a traditional filter-holder and practically uses the same coffee doses as traditional filter-holders. In the filter-holder (301), if the ground coffee is distributed and pressed homogeneously and if extraction is perfect, a column of liquid coffee is formed in the center of the filter. For this reason, the filter-holder (301) is only used by expert bartenders. The advantage of the filter-holder (301) is that it is always very clean, without deposits. Moreover, if extraction is successful, the correct execution of the extraction process is guaranteed.

Going back to Fig. 1, the support unit (13) and the detection unit (5) are mounted in a box (2) recessed in a front wall (104) of the frame of the coffee grinding machine.

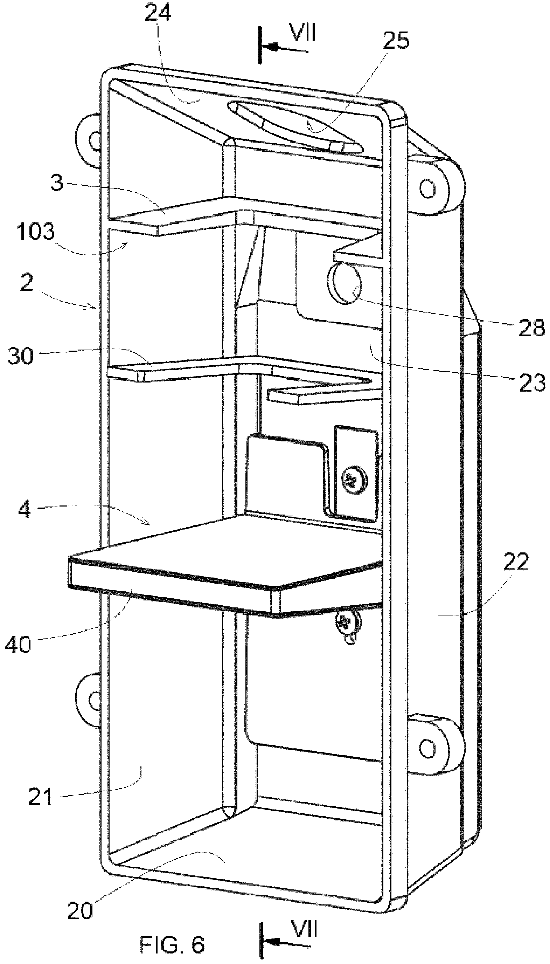

With reference to Fig. 6, the box (2) is parallelepiped and open on top. The box (2) comprises a bottom wall (20), two lateral walls (21, 22), a back wall (23) and an upper wall (24) disposed in inclined position relative to a horizontal plane.

The upper wall (24) has a hole (25) for the insertion of the delivery conduit (102) of the coffee grinding machine.

The support unit (103) comprises an upper fork (3) and a lower fork (30). Each fork (3, 30) is shaped like a "U" that is frontally open and disposed on a horizontal plane.

In view of the above, the walls of the filter-holder are trapped between the two forks (30, 3). In fact, it must be considered that the fastening means (M) have a different position and a different shape according to the brand of the filter-holder and therefore they are preferably not used to support the filter-holder in the coffee grinding machine (100). The bottom of the receptacle (10) of the filter-holder rests on the lower fork (30), in such a way that the delivery nozzle (12) and the beak (13) protrude in lower position under the lower fork.

The upper fork (3) is integral with the box (2) and does not protrude frontally from the box.

The lower fork (30) is movably connected to the box (2) in order to be adjusted in height by means of adjustment means (31), in such a way to adjust the distance between the upper fork and the lower fork according to the height (A) of the receptacle (10) of the filter-holder.

For such a purpose, the lower fork (30) has a plate-like flange (32) that protrudes in lower position from the lower fork.

The adjustment means (31) comprise a bolt (33). The bolt (33) is inserted through a hole of the flange (32) of the lower fork and through a slot (26) obtained in the lower wall (23) of the box and is screwed in a back plate (6) disposed behind the back wall of the box. In such a way, the flange (32) is fixed to the back wall (23) of the box. The height of the lower fork (30) is adjusted by making the bolt (33) slide in the slot (26) of the back wall of the box.

The detection unit (4) comprises a shelf (40) wherein a sensor (5) is disposed.

The shelf (4) is movably connected to the box (2) in order to be adjusted in height by means of adjustment means (41), in such a way to adjust the distance between the shelf (40) and the lower fork (30) according to the height (A) of the delivery nozzle (12) of the filter-holder.

For such a purpose, the shelf (40) has a plate-like lower flange (42) that protrudes in lower position from the shelf.

The adjustment means (41) of the shelf comprise a bolt (43). The bolt (43) is inserted through a slot (46) of the lower flange (42) of the shelf and is screwed in a hole of the flange (32) of the lower fork. In view of the above, the lower flange (42) of the shelf is fixed to the flange (32) of the lower fork that is fixed to the back wall (23) of the box. In such a way, the shelf (40) projects orthogonally from the back wall (23) of the box. The height of the shelf (40) is adjusted by making the bolt (43) slide in the slot (46) of the lower flange (42) of the shelf.

The shelf (40) has an upper plate-like flange (45) that is disposed on the flange (32) of the lower fork, in parallel position relative to the back wall of the box, in such a way to maintain the shelf (40) in a perfectly horizontal position.

The box (2) is made in one piece with the upper fork (3), using a plastic material.

The lower fork (30) is made in one piece with the flange (32), using a plastic material or a metal, such as steel.

The shelf (40) is made of two pieces: a first piece that is integral with the lower flange (42), and a second piece that is integral with the upper flange (45). In fact, the sensor (5) is to be enclosed between the two pieces of the shelf.

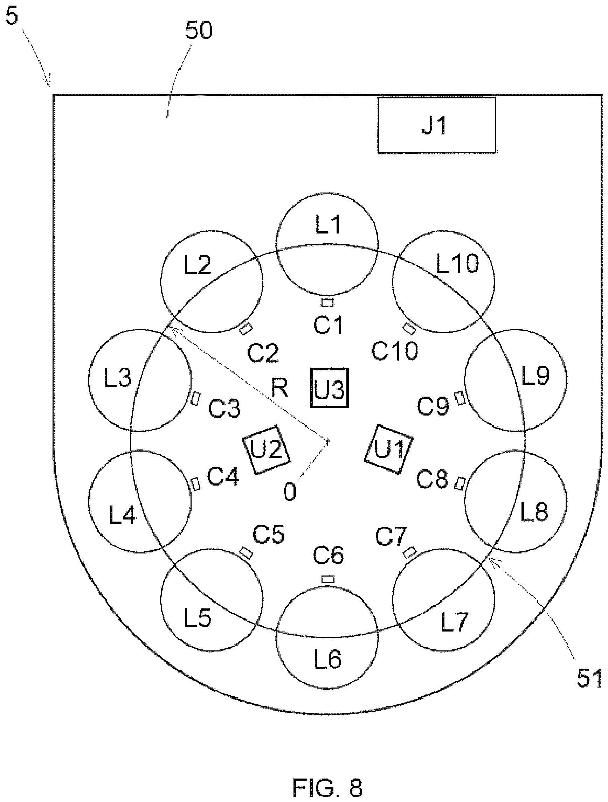

The shelf (40) is internally hollow and has a housing wherein the plate-like sensor (5) is disposed, as shown in Fig. 8. The sensor (5) rests on a rubber pad (7) disposed inside the housing of the shelf (40). The pad (7) has a double function: it acts as seal between the sensor (5) and the shelf (40) to prevent infiltrations of water and condensation, and also to compensate any clearance in the mounting of the sensor inside the compartment of the shelf in order to increase the stability of the sensor. The pad (7) protects the sensor (5) from pressure or deformations that may alter or damage its operation.

With reference to Fig. 8, the sensor (5) is an inductive sensor.

The sensor (5) comprises a printed circuit board (PCB) (50).

A plurality of coils (L1-L10) is mounted on the PCB (50), generating respective inductances. The coils (L1-L10) are disposed along a circumference (51) with a center (O) and a radius (R). The coils (L1-L10) are angularly equally spaced. For illustrative purpose, ten coils are provided and angularly spaced by 36°.

The radius (R) of the circumference (51) where the coils are disposed is substantially equal to the distance (D) between the axis (Y1) of the receptacle of the filter-holder and the axis (Y2) of the beak of the filter-holder.

A capacity (C1-C10) is disposed in the proximity of each coil, in such a way to generate a resonance LC circuit.

At least one integrated circuit (U1, U2 U3) is mounted on the PCB (50). For illustrative purposes, three integrated circuits (U1, U2, U3) are connected to the resonance LC circuits. The integrated circuits (U1, U2, U3) are inductance-to-digital converters (LOCs) and are positioned in a central area of the sensor (5).

A connector (J1) is disposed in a peripheral area of the sensor for connection to an electrical power supply.

When the filter-holder (1) is disposed in the support unit (103), the beak (13) of the filter-holder protrudes in lower position under the lower fork (30) towards the shelf (40).

It must be noted that the support unit (103) and the detection unit (4) are arranged in such a way that the axis (Y1) of the receptacle (10) of the filter-holder passes through the center (O) of the circumference (51) where the coils are disposed, and the axis (Y2) of the beak (13) of the filter-holder is substantially disposed in correspondence of a coil (L1-L10) of the sensor.

When the beak (13) of the filter-holder is disposed above or near a coil of the sensor (5), as the beak (13) is made of metal, the beak affects the resonance of such a coil, inducing a small induced current that modifies the resonance frequency.

The integrated circuit (U1, U2, U3) of the sensor reads the resonance frequencies of each coil and creates a map of all coils.

The integrated circuit (U1, U2, U3) detects the induced current variation between the coils of the sensor. If the induced current variation of one of the coils, or of two proximal coils, is relevant with respect to the remaining coils, it means that the filter-holder (1) with one beak is inserted, as shown in Fig. 2.

If the integrated circuit (U1, U2, U3) detects a different induced current in two coils compared to the other coils, it means that the filter-holder (201) with two beaks is inserted, as shown in Fig. 4.

If the integrated circuit (U1, U2, U3) detects the same induced current in all coils, or a minimum induced current variation (lower than a minimum threshold value), it means that the filter-holder (301) without beaks is inserted, as shown in Fig. 5.

The coils are disposed along the circumference because the beaks of the filter-holder are not always disposed in the same position relative to the handle. In fact, said beaks are screwed to the remaining part of the body of the filter-holder and their angular position may vary according to various factors (wear, tightening torque, etc.).

Obviously, the sensor (5) can be a magnetic sensor that works in the same way as the inductive sensor. In such a case, the coils (L1-L10) are replaced by elements that are sensitive to the magnetic field variation produced by the proximity of a beak of the filter-holder. Such elements that are sensitive to the magnetic field variation can be reed switches or the like.

With reference to Fig. 1, the sensor (5) is activated by a switch (W) disposed between the lower fork (30) and the upper fork (3), which detects the insertion of the filter-holder (1) in the support unit (3). For such a purpose, the back wall (23) of the box is provided with a hole (28) (Fig. 2) through which the switch (W) is inserted.

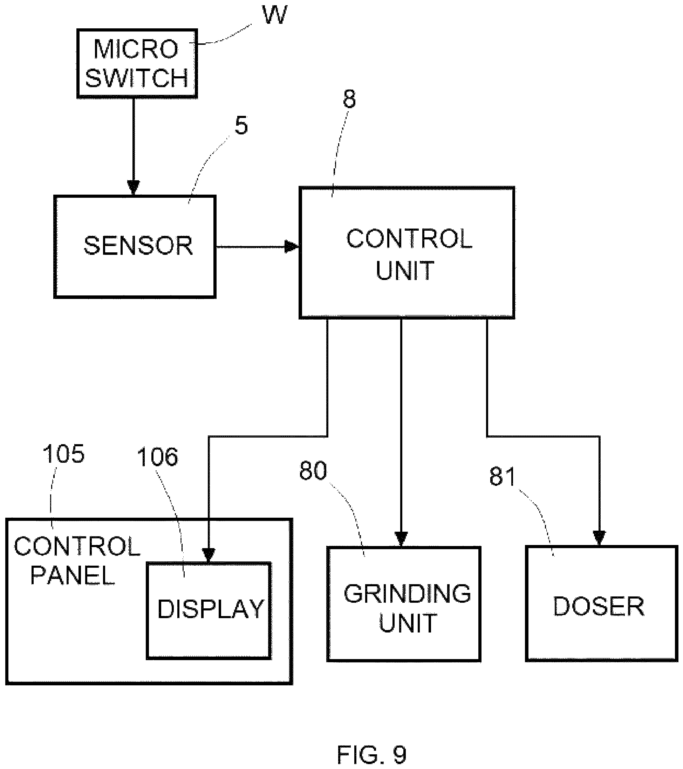

With reference to Fig. 9, the sensor (5) is connected to a control unit (8) of the coffee grinding machine, in such a way that a control unit (8) receives information on the type of filter-holder that is inserted in the support unit (103).

The control unit (8) is connected to the control panel (105), to the grinding unit (80) and to a doser (81) suitable for delivering a correct dose of ground coffee according to the type of filter-holder to be used.

The grinding unit (80) and the doser (81) are of known type and therefore a detailed description is omitted.

In a manual mode, the display (106) informs the user of the type of filter inserted in the support unit (103) in such a way that the user can use the knob (107) to manually set the correct dose of ground coffee to be delivered according to the type of filter-holder indicated in the display.

In an automatic mode, the grinding unit (80) and the doser are directly controlled by the control unit (8) in such a way to deliver the correct dose of ground coffee according to the type of filter-holder detected by the sensor (5).

## Claims

1. Coffee grinding machine (100) comprising:
- a hopper or a container suitable for containing coffee beans;
- a grinding unit for grinding the coffee beans in such a way to obtain ground coffee,
- a delivery conduit (102) to deliver ground coffee,
- different types of filter-holders suitable for being used in a coffee machine to extract liquid coffee; each filter-holder being provided with a receptacle (10) suitable for containing one or two doses of ground coffee delivered by said delivery conduit; wherein a first type of filter-holder (1) has a delivery nozzle (12) with a beak (13) and a second type of filter-holder (201) has a delivery nozzle (12) with two beaks (13)
- a support unit (103) disposed under the delivery conduit (102) to support one of said filter-holders,
and
- a detection unit (4) disposed under said support unit (103) and configured in such a way to detect the type of filter-holder supported by said support unit (103)
**characterized in that** said detection unit (4) comprises a sensor (5) of inductive or magnetic type, suitable for detecting a variation of induced current or magnetic field generated by said beak of the filter-holder
wherein said sensor (5) comprises a PCB (50) disposed in horizontal position under said support unit (103); wherein a plurality of coils (L1-L10) is mounted on said PCB (50) and is disposed along a circumference (51) with a center (O) and a radius (R).

2. The coffee grinding machine (100) of claim 1, comprising a third type of filter-holder (303) without delivery nozzle.

3. The coffee grinding machine (100) of claim 1 or 2, wherein the receptacle (10) of the filter-holder has an axis (Y1), the beak (13) has an axis (Y2) and the axis (Y1) of the receptacle is spaced from the axis (Y2) of the beak by a distance (D), and
the radius (R) of the circumference (51) where the coils of the sensors (5) are disposed is substantially equal to the distance (D) between the axis (Y1) of the receptacle of the filter-holder and the axis (Y2) of the beak of the filter-holder.

4. The coffee grinding machine (100) of any one of the preceding claims, wherein said coils (L1-L10) are angularly equally spaced.

5. The coffee grinding machine (100) of any one of the preceding claims, wherein said sensor (5) is electrically connected to a control unit (8) of the machine that is electrically connected to a control panel (105), to the grinding unit (80) and to a doser (81) suitable for delivering a dose of ground coffee, wherein said control unit (8) is configured in such a way to control the control panel (105) in order to provide information on the type of filter-holder detected by the sensor (5), and/or control the grinding unit (80) and the doser (81) in order to deliver a correct dose of ground coffee according to the type of filter-holder detected by the sensor (5).

6. The coffee grinding machine (100) of any one of the preceding claims, wherein said detection unit (4) comprises an internally empty shelf (40) provided with a compartment wherein said sensor (5) is disposed on a rubber pad (7).

7. The coffee grinding machine (100) of any one of the preceding claims, comprising a switch (Z) configured in such a way to activate said sensor (5) when a filter-holder is supported by said support unit (103).

8. The coffee grinding machine (100) of any one of the preceding claims, wherein said support unit (103) and said detection unit (4) are disposed in a box (2) recessed in a front wall (104) of a frame of the coffee grinding machine.

9. The coffee grinding machine (100) of claim 8, wherein
said support unit (103) comprises an upper fork (3) integral with the box (2) and a lower fork (30) that can be adjusted in height relative to the upper fork (3) according to a height (A) of said receptacle of the filter-holder; and
said detection unit (4) can be adjusted in height relative to the lower fork (30) according to a height (B) of the delivery nozzle (12) and beak (13) of the filter-holder.

## Patentansprüche

1. Kaffeemühle (100), umfassend:
- einen Einfülltrichter oder Behälter zum Aufnehmen von Kaffeebohnen;
- ein Mahlwerk zum Mahlen der Kaffeebohnen, um Kaffeemehl zu erhalten,
- eine Ausgabeleitung (102) zum Ausgeben des Kaffeemehls,
- verschiedene Typen von Filterhaltern, die dazu bestimmt sind, in einer Kaffeemaschine für den Auszug von flüssigem Kaffee verwendet zu werden; wobei jeder Filterhalter einen Behälter (10) aufweist, der geeignet ist, eine oder zwei Portionen Kaffeemehl aufzunehmen, das aus der Ausgabeleitung ausgegeben wird; wobei ein erster Typ von Filterhalter (1) eine Ausgabedüse (12) mit einer Ausgabetülle (13) aufweist und ein zweiter Typ von Filterhalter (201) eine Ausgabedüse (12) mit zwei Ausgabetüllen (13) aufweist
- eine Halteeinrichtung (103), die unter der Ausgabeleitung (102) angeordnet ist, um einen der Filterhalter zu halten;
- eine Erfassungseinrichtung (4), die unter der Halteeinrichtung (103) angeordnet ist und konfiguriert ist, um den Typ von Filterhalter zu erfassen, der von der Halteeinrichtung (103) gehalten wird;
**dadurch gekennzeichnet, dass**
die Erfassungseinrichtung (4) einen Sensor (5) vom induktiven oder magnetischen Typ umfasst, der geeignet ist, eine Änderung des induzierten Stroms oder des Magnetfeldes zu erfassen, die von der Ausgabetülle des Filterhalters erzeugt wird;
wobei
der Sensor (5) eine gedruckte Leiterplatte (PCB) (50) umfasst, die horizontal unter der Halteeinrichtung (103) angeordnet ist; wobei eine Mehrzahl von Spulen (L1 - L10) auf der gedruckten Leiterplatte (PCB) (50) montiert ist und entlang eines Umfangs (51) mit einem Mittelpunkt (O) und einem Radius (R) angeordnet ist.

2. Kaffeemühle (100) nach Anspruch 1, umfassend einen dritten Typ von Filterhalter (303), der keine Ausgabetülle aufweist.

3. Kaffeemühle (100) nach Anspruch 1 oder 2, wobei der Behälter (10) des Filterhalters eine Achse (Y1) aufweist, die Ausgabetülle (13) eine Achse (Y2) aufweist und die Achse (Y1) des Behälters von der Achse (Y2) der Ausgabetülle in einem Abstand (D) beabstandet ist und
der Radius (R) des Umfangs (51), auf dem die Spulen des Sensors (5) angeordnet sind, im Wesentlichen gleich dem Abstand (D) zwischen der Achse (Y1) des Behälters des Filterhalters und der Achse (Y2) der Ausgabetülle des Filterhalters ist.

4. Kaffeemühle (100) nach einem der vorstehenden Ansprüche, wobei die Spulen (L1 - L10) winkelmäßig gleich beabstandet sind.

5. Kaffeemühle (100) nach einem der vorstehenden Ansprüche, wobei der Sensor (5) elektrisch mit einer Steuereinheit (8) der Maschine verbunden ist, die elektrisch mit einem Bedienfeld (105), mit dem Mahlwerk (80) und einer Dosiereinheit (81) verbunden ist, die geeignet ist, eine Portion Kaffeemehl auszugeben, wobei die Steuereinheit (8) so konfiguriert ist, dass sie das Bedienfeld (105) steuert, um Informationen über den vom Sensor (5) erfassten Typ von Filterhalter zu liefern und/oder das Mahlwerk (80) und die Dosiereinheit (81) zu steuern, um eine korrekte Portion Kaffeemehl je nach dem vom Sensor (5) erfassten Typ von Filterhalter auszugeben.

6. Kaffeemühle (100) nach einem der vorstehenden Ansprüche, wobei die Erfassungsvorrichtung (4) ein leeres Innenfach (40) mit einer Kammer umfasst, in der der Sensor (5) auf einer Gummimatte (7) angeordnet ist.

7. Kaffeemühle (100) nach einem der vorstehenden Ansprüche, umfassend einen Schalter (Z), der konfiguriert ist, um den Sensor (5) zu aktivieren, wenn ein Filterhalter von der Halteeinrichtung (103) gehalten wird.

8. Kaffeemühle (100) nach einem der vorstehenden Ansprüche, wobei die Halteeinrichtung (103) und die Erfassungseinrichtung (4) in einer Box (2) angeordnet sind, die in einer Vorderwand (104) eines Gestells der Kaffeemühle eingelassen ist.

9. Kaffeemühle (100) nach Anspruch 8, wobei
die Halteeinrichtung (103) eine obere Gabel (3) umfasst, die einstückig mit der Box (2) ist, und eine untere Gabel (30), die in Bezug auf die obere Gabel (3) je nach einer Höhe (A) des Behälters des Filterhalters höhenverstellbar ist; und
die Erfassungseinrichtung (4) in Bezug auf die untere Gabel (30) je nach einer Höhe (B) der Ausgabedüse (12) und der Ausgabetülle (13) des Filterhalters höhenverstellbar ist.

## Revendications

1. Machine à moudre le café (100) comprenant :
- une trémie ou un récipient pour contenir les grains de café,
- un groupe de moulins à café pour moudre les grains de café de manière à obtenir du café en poudre,
- un conduit de débit (102) pour fournir le café en poudre,
- plusieurs types de porte-filtres destinés à être utilisés dans une machine à café pour l'extraction de café liquide ; chaque porte-filtre ayant un récipient (10) apte à contenir une ou deux doses de café en poudre fournies par ledit conduit de débit ; où un premier type de porte-filtre (1) a une buse de débit (12) avec un bec de sortie (13) et un second type de porte-filtre (201) a une buse de débit (12) avec deux becs de sortie (13),
- un groupe de support (103) disposé sous le conduit de débit (102) pour soutenir l'un des susdits porte-filtres,
- un groupe de détection (4) disposé sous ledit groupe de support (103) et configuré de manière à détecter le type de porte-filtre soutenu par ledit groupe de support (103) ;
**caractérisé en ce que**
ledit groupe de détection (4) comprend un capteur (5) de type inductif ou magnétique, apte à détecter une variation de courant induit ou un champ magnétique généré par ledit bec de sortie du porte-filtre ;
où
ledit un capteur (5) comprend une carte de circuit imprimé PCB (50) disposée horizontalement sous ledit groupe de support (103) ; où une pluralité de bobines (L1 - L10) sont installées sur ladite carte de circuit imprimé PCB (50) et disposées le long d'une circonférence (51) ayant un centre (O) et un rayon (R).

2. Machine à moudre le café (100) selon la revendication 1, comprenant un troisième type de porte-filtre (303) qui n'a aucune buse de débit.

3. Machine à moudre le café (100) selon la revendication 1 ou 2, où le récipient (10) du porte-filtre a un axe (Y1), le bec de sortie (13) a un axe (Y2) et l'axe (Y1) du récipient est éloigné de l'axe (Y2) du bec de sortie d'une distance (D), et
le rayon (R) de la circonférence (51) le long de laquelle sont disposées les bobines du capteur (5) est essentiellement égal à la distance (D) entre l'axe (Y1) du récipient du porte-filtre et l'axe (Y2) du bec de sortie du porte-filtre.

4. Machine à moudre le café (100) selon l'une quelconque des revendications précédentes, où lesdites bobines (L1 - L10) sont disposées équidistantes angulairement entre elles.

5. Machine à moudre le café (100) selon l'une quelconque des revendications précédentes, où ledit capteur (5) est branché électriquement à une unité de commande électronique (8) de la machine branchée électriquement à un panneau de commande (105), au groupe de moulins à café (80) et à un groupe doseur (81) apte à débiter une dose de café en poudre, où ladite unité de commande électronique (8) est configurée de manière à commander le panneau de commande (105) pour fournir des informations sur le type de porte-filtre détecté par le capteur (5), et/ou commander le groupe de moulins à café (80) et le groupe doseur (81) pour débiter une dose correcte de café moulu en fonction du porte-filtre détecté par le capteur (5).

6. Machine à moudre le café (100) selon l'une quelconque des revendications précédentes, où ledit groupe de détection (4) comprend une tablette (40) creuse à l'intérieur, ayant un emplacement dans lequel est disposé ledit capteur (5) sur un petit tapis (7) en caoutchouc.

7. Machine à moudre le café (100) selon l'une quelconque des revendications précédentes, comprenant un interrupteur (Z) configuré de manière à activer ledit capteur (5), quand un porte-filtre est soutenu par ledit groupe de support (103).

8. Machine à moudre le café (100) selon l'une quelconque des revendications précédentes, où ledit groupe de support (103) et ledit groupe de détection (4) sont disposés dans une boite (2) encastrée dans une paroi antérieure (104) d'un châssis de la machine à moudre le café.

9. Machine à moudre le café (100) selon la revendication 8, où ledit groupe de support (103) comprend une fourche supérieure (3) solidaire avec la boite (2) et une fourche inférieure (30) réglable en hauteur par rapport à la fourche supérieure (3), en fonction d'une hauteur (A) dudit récipient du porte-filtre ; et
ledit groupe de détection (4) est réglable en hauteur par rapport à la fourche inférieure (30) en fonction d'une hauteur (B) de la buse de débit (12) et du bec de sortie (13) du porte-filtre.
